# EUROPEAN PATENT SPECIFICATION

(11) **EP 3 730 007 B1**
(45) Date of publication and mention of the grant of the patent: **22.09.2021**
(21) Application number: 20177603.6
(22) Date of filing: 29.05.2020
(51) Int. Cl.: A47J 31/36

(54) **BREWING DEVICE FOR PRODUCING A BEVERAGE FROM A SINGLE-SERVE CAPSULE**
BRÜHVORRICHTUNG ZUR HERSTELLUNG EINES GETRÄNKS AUS EINER EINZELPORTIONSKAPSEL
DISPOSITIF D'INFUSION POUR PRODUIRE UNE BOISSON À PARTIR D'UNE CAPSULE À PORTION INDIVIDUELLE

(30) Priority: 31.07.2019 IT 201900013458; 22.03.2019 EP 19164740
(43) Date of publication of application: 28.10.2020
(73) Proprietor: SAGA COFFEE S.p.A., 40041 Gaggio Montano (BO) (IT)
(72) Inventor: FIN, Giuseppe, 40041 GAGGIO MONTANO (BO) (IT)
(74) Representative: Giannini, Manuela

(56) References cited:
- WO-A1-2014/056716
- US-A1- 2009 199 518

## Description

### Cross-reference to related applications

This Patent Application claims priority from European Patent Application No. 19164740.3 filed on March 22, 2019 and from Italian Patent Application No. 102019000013458 filed on July 31, 2019.

### Technical Field of the Invention

The present invention relates to a brewing device for producing a beverage from a single-serve cartridge containing brewable material and typically in the form of a capsule or pod.

In particular, the present invention can be applied to cartridges that need to be perforated to allow a brewing water to be injected therein and/or a beverage to be extracted therefrom.

An example of such cartridges are the so-called pods, consisting of two sheets, whether water-proof or not, that are mutually coupled around an amount of brewable material, e.g., ground and pressed coffee, such as to define a casing consisting of a central rounded portion, which contains the brewable material, and a flat circular flange that surrounds and seals the central portion.

### State of the Art

As is known, in order for the cartridges to be perforated to inject the brewing water therein and/or extract the beverage therefrom, the brewing devices are equipped with perforators adapted to perforate the cartridges during or immediately after closing a brewing chamber as a consequence of injection of pressurised brewing water therein.

Usually, the known brewing devices comprise two parts, which define respective brewing half-chambers and are assembled to relatively move along a horizontal axis between an open configuration, in which a capsule is loadable between the two parts, and a closed configuration, in which the two parts are pressed one against the other and the respective brewing half-chambers define the brewing chamber therebetween.

Usually, one of the two parts is a brewing water injection assembly, while the other part is a beverage extraction assembly. Depending on the cartridge used, one or both of the brewing half-chambers accommodate a respective perforator.

In the case of pods, particularly those with a waterproof casing, for instance made of aluminium, both the water injection assembly and the beverage extraction assembly are provided with respective perforators.

As is known, on the market several types of perforators exist, which generally comprise a plate integral to the bottom of the respective brewing half-chamber, and a plurality of perforating tips carried by the plate and provided with inner passages for the brewing water or the beverage, or full tips. In the latter case, the plate is usually provided with holes for the flow of the water or the beverage.

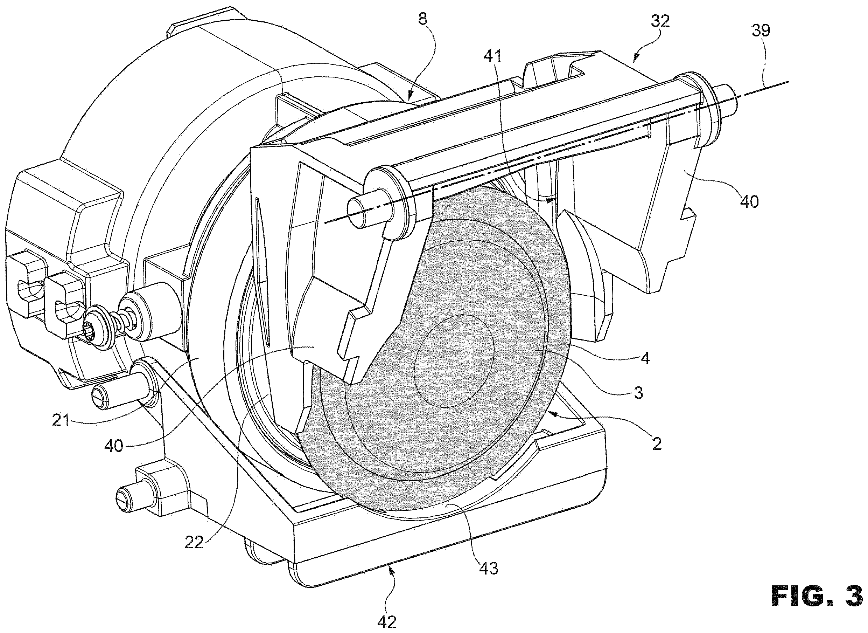

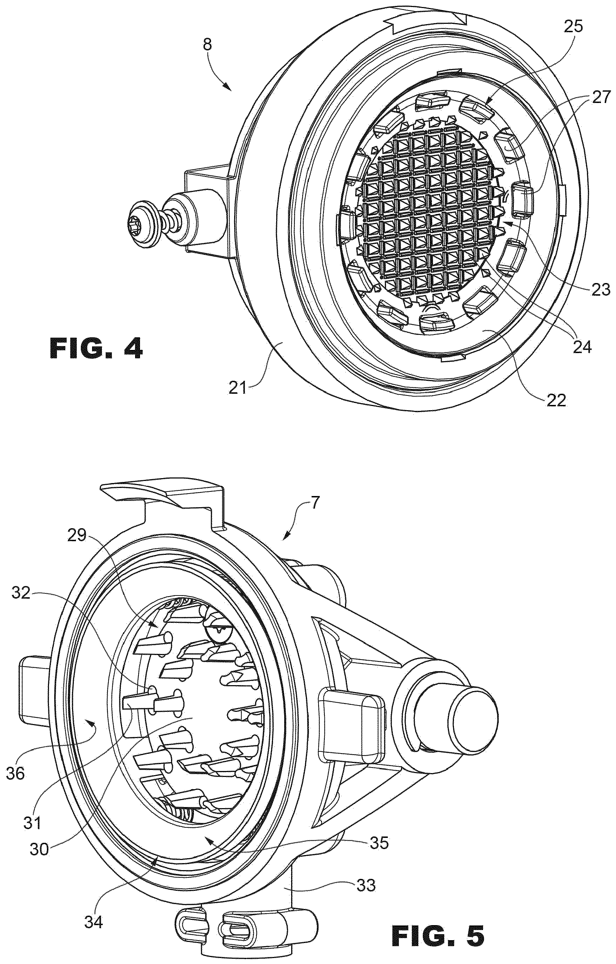

Examples of perforators are offered in WO 2014/188285 A1, WO 2009/013777 A1, WO 2005/039258 A1, EP 2 445 379 B1, EP 2 422 661 B1, EP 1 247 480 B1, CH 697 407 B1, EP 2 053 950 B1. Document WO 2014/056716 A1 (= EP 2 906 087 A1) discloses a brewing device for producing a beverages from a single-serve cartridge in the form of a capsule; the brewing device comprises a perforating device to perforate the cartridge and including a plate and a plurality of perforators 20 protruding from the plate (see Fig. 3); each perforator has the shape of a blunt tip delimited by a side surface and by a top surface forming, with the side surface, a cutting edge; and the shape of the cutting edge is generically bilobed and formed by two convex portions separated by two symmetrical concave portions (see Fig. 4). The top surface 4 of the perforator 20 is planar.

### Object and Summary of the Invention

The object of the present invention is to provide a brewing device with an improved perforator.

According to the present invention a brewing device is provided, as claimed in the appended claims.

### Brief Description of the Drawings

The invention will now be described with reference to the enclosed drawings, which show a non-limiting embodiment thereof, wherein:
Figure 1 shows a perspective view, with parts removed for clarity, of a preferred embodiment of the brewing device for producing a beverage of the present invention;
Figure 2 is a longitudinal section of the brewing device of Figure 1 disposed in an open configuration, in which a capsule may be loaded;
Figures 3, 4 and 5 show a perspective view, in an enlarged scale, of corresponding details of the brewing device arranged in the configuration of Figure 2;
Figure 6 is a longitudinal section of the brewing device of Figure 1 arranged in a first closed intermediate configuration;
Figure 7 is a longitudinal section of the brewing device of Figure 1 arranged in a second closed intermediate configuration;
Figure 8 is a longitudinal section of the brewing device of F1 arranged in a beverage extraction closed configuration;
Figures 9 and 10 show a perspective view, in an enlarged scale, of corresponding details of the brewing device arranged in the configuration of Figure 8;
Figure 11 shows the piercing device of Figure 5 and 10;
Figure 12 is a side view of the piercing device of Figure 11;
Figure 13 is a section, along the line XIII-XIII, of Figure 12;
Figure 14 shows a different embodiment of the piercing device of Figures 5 and 10;
Figure 15 is a side view of the piercing device of Figure 14; and
Figure 16 is a section, along the line XVI-XVI, of Figure 15.

### Detailed Description of Preferred Embodiments of the Invention

The present invention will now be described in detail referring to the enclosed Figures to allow a person skilled in the art to implement it and use it. Various changes to the described embodiments will be immediately apparent to the skilled person and the general principles described may be applied to other embodiments and applications without departing from the protection scope of the present invention, as defined in the enclosed claims. Therefore the present invention is not to be intended as limited to the described and illustrated embodiments, but it must be granted the widest protection scope in compliance with the principles and the characteristics herein described and claimed.

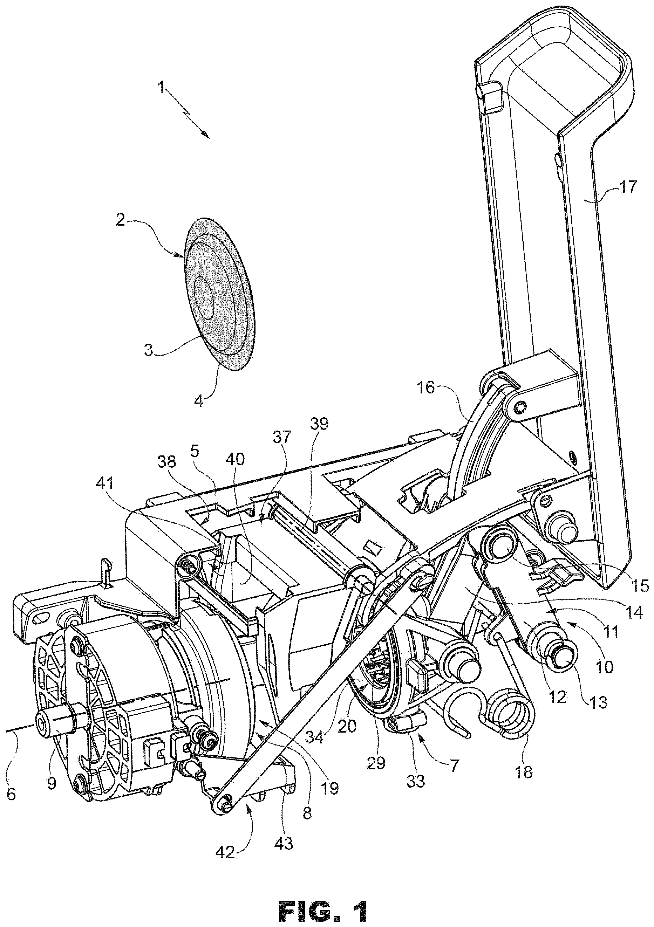

In Figure 1, a brewing device for producing a beverage from a single-serve pod 2 containing a brewable material such as, for example, ground coffee, is overall indicated by reference numeral 1.

The pod 2 is a known type of pod comprising a casing formed of two sheets of plastic and/or aluminium or paper mutually coupled to form a compact central body 3 containing a certain amount of a brewable material, for example ground coffee, and having a generally lenticular shape, and an outer annular flange 4 that extends around, and seals, the central body 3.

Preferably, the pod 2 has a shape that is symmetrical with respect to a central plane containing the flange 4 and with respect to an axis 2A perpendicular to said central plane and passing through the centre of the central body 3. Preferably, furthermore, the central body 3 and the flange 4 have a circular shape.

The brewing device 1 is structured to carry out an automatic brewing process, known in itself, namely a brewing process which provides injecting hot pressured water from a side of the pod 2, which was previously fluid-tightly closed inside a brewing chamber, and extracting the beverage from the opposite side the pod 2.

The brewing device 1 is configured to be connected to a source of hot pressured water and can be integrated in a machine for producing beverages intended for home and office use, as in the case of the example described in the present specification and illustrated in the appended claims, or it can be assembled inside a beverage vending machine.

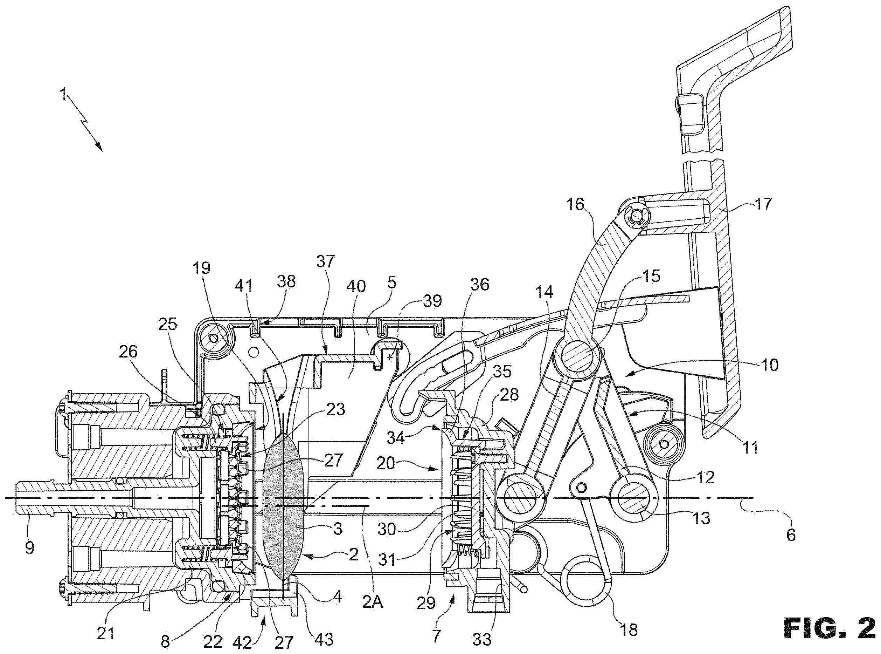

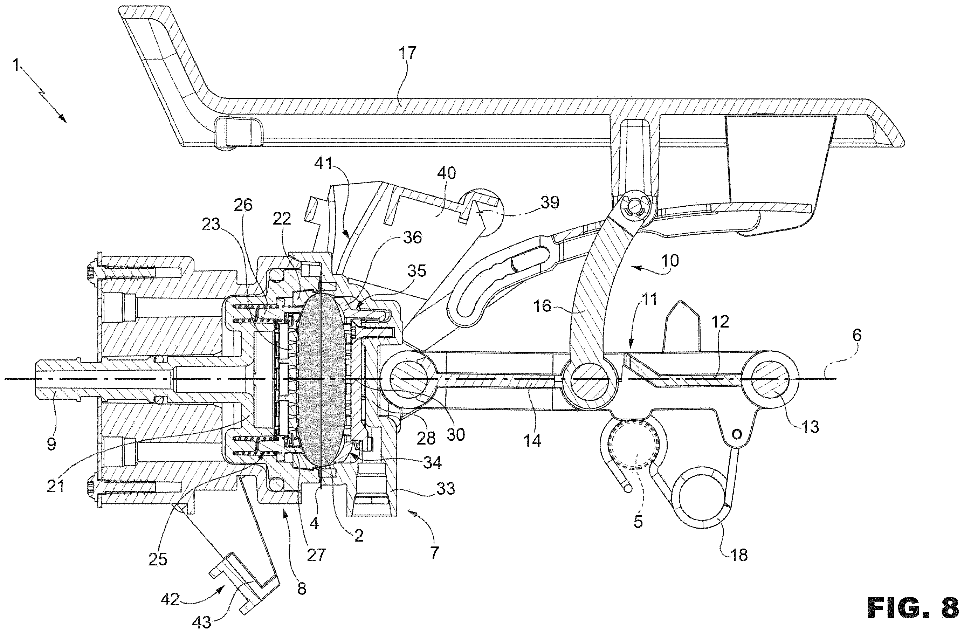

According to what illustrated in figures 1 and 2, the brewing device 1 comprises a frame 5 composed of two half-shells (only one of which is illustrated) removably assembled between each other. The brewing device 1 further comprises two functional assemblies, which are supported by the frame 5, are each other opposite and aligned along a substantially horizontal axis 6, and are mutually movable to make the brewing device 1 assume an open configuration (Figure 1), wherein the two functional assemblies are spaced out such to define a gap between them for loading a pod 2, and a closed configuration (Figure 8), wherein the two functional assemblies are coupled and define the aforesaid brewing chamber.

The two functional assemblies comprise an injection assembly 7 having the function of supplying hot pressured water to the pod 2 enclosed in the brewing chamber, and an extraction assembly 8 having the function of conveying the beverage extracted from the pod 2 to an outlet duct 9 obtained in the extraction assembly 8 and fluidically communicating, by a (not illustrated) flexible duct, with a (not illustrated) beverage dispensing nozzle.

According to a preferred embodiment, as that illustrated in the enclosed figures, the extraction assembly 8 is fixedly assembled on the frame 5, while the injection assembly 7 is movable, upon thrust of a drive mechanism 10, along axis 6, between the retracted position, which corresponds to the open configuration of the brewing device 1, and an advanced position, which corresponds to the closed configuration of the brewing device 1.

The drive mechanism 10 is of the manual type and comprises a toggle-joint mechanism 11 arranged between the injection assembly 7 and a longitudinal end of the frame 5 and comprising a crank 12 hinged to the frame 5 to rotate about a pin 13 horizontal and transverse to the axis 6, and a connecting rod 14 having an end hinged to the crank 12 by means of a pin 15 parallel to the pin 13 and the other end hinged to the injection assembly 7. The drive mechanism 10 further comprises a transmission lever 16 hinged, at an end, to the pin 15 and, at the opposite end, to a drive handle 17 rotatably assembled on the frame 5. In use, the rotation of the handle 17 between a lifted position (Figure 2) and a lowered position (Figure 8) controls, by means of the transmission lever 16 and the toggle-joint mechanism 11, the translation of the injection assembly 7 between the retracted position and the advanced position.

Between the frame 5 and the crank 12 a spring 18 is arranged which serves as a bistable spring, in other words it makes sure that the handle 17 reaches and keeps the lifted and lowered positions.

For this purpose, an end of the spring 18 is fixed to the frame 5, while the other end is fixed to the crank 12 at a point which, when the handle 17 is in the lifted position (Figure 2), is arranged above the pin 13 such that the force of the spring 18 applied to the crank 12 results in an "opening" torque, i.e. a torque that tends to make the handle 17 rotate towards the lifted position; and, when the handle 17 is in the lowered position (Figure 8), it is arranged below the pin 13 such that the force of the spring 18 applied to the crank 12 results in a "closure" torque, i.e. a torque that tends to make the handle 17 rotate towards the lowered position.

According to a non-illustrated variant, the drive mechanism 10 is not manual but automatized and comprises, for example, a rotative actuator coupled to the toggle-joint mechanism 11 or a linear actuator directly coupled to the injection assembly 7.

According to what illustrated in Figure 2, the extraction assembly 8 and the injection assembly 7 define respective brewing half-chambers 19 and 20, which are conformed to mutually define, when the brewing device 1 is in the closed position, a brewing chamber having a shape complimentary to that of the central body 3 and of the pod 2.

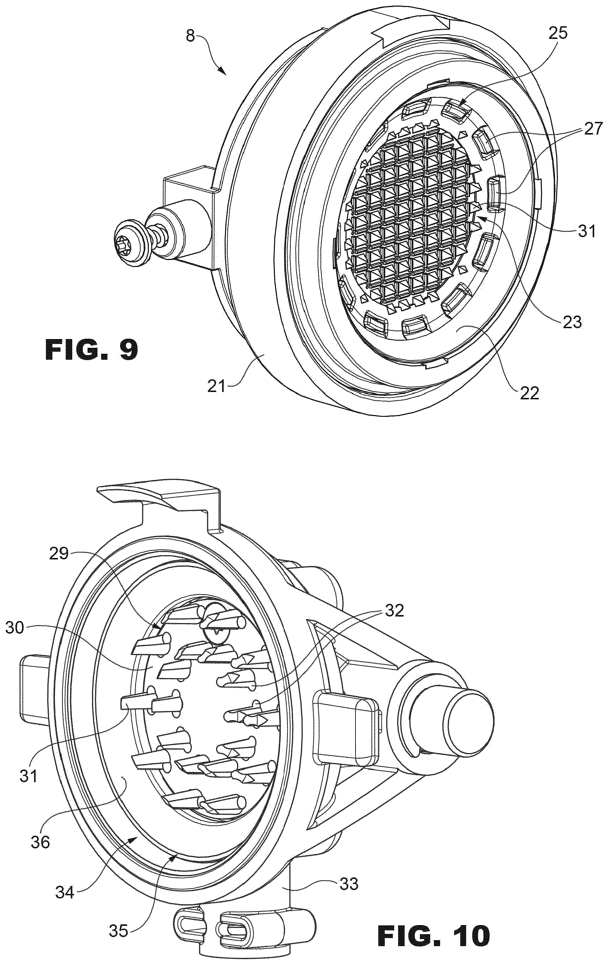

In particular, according to what illustrated in figures 2, 8 and, in greater detail, in figures 4 and 9, the brewing half-chamber 19 of the extraction assembly 8 is obtained in a cup-shaped body 21 arranged with its concavity towards the injection assembly 7 and is defined by a cavity coaxial to the axis 6, directed towards the injection assembly 7 and having a shape that is substantially complimentary to the half of the central body 3 of the pod 2, in relation to the plane passing through the flange 4.

According to the preferred embodiment illustrated in the enclosed figures, the brewing half-chamber 19 is formed by a concave insert 22 arranged at the open end of the concavity of the cup-shaped body 21 and delimited by a bottom surface, preferably perpendicular to the axis 6 and by a curved annular side wall.

The extraction assembly 8 further comprises a piercing device 23 adapted to pierce the pod 2 when the latter is closed in the brewing chamber, to allow extracting the beverage. The piercing device 23 is supported by the concave insert 22 and comprises a plurality of piercing spikes 24 protruding from the bottom surface of the concave insert 22 to the injection assembly 7. Piercing spikes 24 are full tips and can be of any shape adapted to the object such as, for example, a pyramid shape, as in the case illustrated in the enclosed figures. The concave insert 22 further has a plurality of pass-through holes, distributed in the bottom surface between piercing spikes 24 and adapted to convey the beverage extracted from the pod 2 to a collecting chamber obtained in the cup-shaped body 21 and fluidically communicating with the outlet duct 9.

According to what illustrated in detail in figures 4 and 9, the extraction assembly eventually comprises a segmented centering/extracting device 25 intended to ease the centering of the pod 2 in the brewing half-chamber 19 when the brewing device 1 is closed and the exhausted pod 2 is detached from the piercing device 23 when the brewing device 1 returns to the open position at the end of the beverage dispensing step.

The segmented centering/extracting device 25 is defined by a ring 26 (figures 2, 6, 7 and 8), elastically assembled between the cup-shaped body 21 and the concave insert 22, and by a plurality of protruding elements 27 which are integral with the ring 26, are evenly distributed around the axis 6 and extend slidably, in a direction that is parallel to the axis 6, through corresponding slots obtained in the concave insert 22.

The protruding elements 27 are configured to assume a normal extracted or protruding position, wherein they extend inside the brewing half-chamber 19 and form a crown of protruding elements 27 all around the piercing device 23 (Figure 4), and a forced retracted or re-entrant position, in which the protruding elements 27, following insertion of the pod 2 in the brewing half-chamber 19, are pushed backwards in corresponding slots towards the bottom of the cup-shaped body 21 so as to no longer project within the brewing half-chamber 19 (Figure 9).

When the brewing device 1 is re-opened, and the pod 2 in no longer forced in the half-chamber 19 by the injection assembly 7, the protruding elements 27 elastically return to their normal extracted position thereby thrusting the pod 2 in an axial direction such to cause detachment and departing from the piercing device 23.

According to what illustrated in figures 2, 8 and, in greater detail, in figures 5 and 10, the injection assembly 7 also comprises a cup-shaped body 28 arranged with its concavity towards the extraction assembly 8 and the corresponding brewing half-chamber 20 is obtained in the cup-shaped body 28 and is defined by a cavity coaxial to the axis 6, directed towards the extraction assembly 8 and having a shape that is substantially complimentary to the half of the central body 3 of the pod 2, in relation to the plane passing through the flange 4.

The brewing half-chamber 20 is provided with a piercing device 29 adapted to pierce the pod 2 when the latter is closed in the brewing chamber to allow injecting hot pressured water. The piercing device 29 comprises a disc 30 integrally coupled with the bottom of the cup-shaped body 28 and provided with a plurality of piercing spikes 31, which will be described in detail hereinafter, protruding from the disc 30 towards the inside of the brewing half-chamber 20.

The disc 30 has a plurality of holes 32 adapted to let hot pressured water supplied to the injection assembly 7 through an inlet duct 33 enter into the brewing half-chamber 20.

According to the preferred embodiment illustrated in the enclosed figures and, in detail, in figures 5 and 10, the injection assembly 7 eventually comprises an annular centering/extracting device 34 intended to ease the centering of the pod 2 in the brewing half-chamber 20 while the brewing device 1 is closed and the detachment of the exhausted pod 2 from the piercing device 29 when the brewing device 1 returns to the open position at the end of the beverage dispensing step.

The annular centering/extracting device 34 comprises an annular element 35, which is assembled, by interposing elastic means, between the piercing device 29 and the cup-shaped body 28 and has, towards the extraction assembly 8, a portion of concave bell-mouthed end 36 coaxial to the axis 6. The annular element 35 is movable parallel to the axis 6 between a normal extracted position, in which the portion of concave bell-mouthed end 36 is arranged beyond the piercing spikes 31 (Figure 5), and a forced retracted position, in which the portion of concave bell-mouthed end 36 is pushed towards the bottom of the cup-shaped body 28 from the pod 2 which occupies the brewing half-chamber 20 and it is arranged around the piercing spikes 31 such to define part of the brewing half-chamber 20 thereof (Figure 10).

When the brewing device 1 is re-opened, and the pod is no longer forced in the brewing half-chamber 20, the annular centering/extracting device 34 returns, upon thrusting by the mentioned elastic means, to the normal extracted position thrusting the pod 2 in the axial direction so as to cause detachment and departing of the pod 2 from the piercing device 29.

Referring to figures 1, 2 and 3, the brewing device 1 further comprises a pod support device 37, which is arranged between the injection assembly 7 and the extraction assembly 8 and it is configured to receive and retain a new pod 2, which, in use, is supplied by gravity through an insertion opening 38 formed in the frame 5 or in an external cover supported by the frame 5.

The pod support device 37 is mounted on the frame 5 to rotate around an axis 39 that is horizontal and transverse to axis 6 between a pod retention position, wherein the pod support device 37 faces injection and extraction assemblies 7 and 8 and is able to retain a pod 2 in a loading position (Figure 2), and a disengagement position, wherein the pod support device 27 is rotated upwards around the axis 39 and no longer contributes to support the pod 2, which is being delivered to injection and extraction assemblies 7 and 8 (Figure 8).

In particular, the axis 39 is arranged above the injection assembly 7 and extraction assembly 8, and the pod support device 37 comprises two plates 40 arranged at opposite sides of the axis 6 and mutually connected by means of an upper crossbeam 41.

The plates 40 have, on corresponding inner surfaces directed one towards the other and towards the axis 6, corresponding grooves 41, which are specular with respect to a vertical longitudinal plane passing through the axis 6 and are configured to be engaged, in use, by the flange 4 of a pod 2 supplied from above through the insertion opening 38.

The grooves 41 have on the bottom a curved portion which defines a transverse shoulder that is configured to retain the pod 2 in the said loading position, but that can be easily trespassed by the flange 4 itself when the pod support device 37 is rotated upwards. In this step, in fact, as we will see later on, while the pod support device 37 moves towards the disengagement position and takes the pod 2 to the brewing half-chamber 19, the flange 4 disengages from the pod support device 37 due to the flexibility of the pod 2 which slightly deforms at its major diameter to let the pod support device 37 be free to slip upwards and allow the pod 2 to stay between the brewing half-chambers 19 and 20.

According to what illustrated in Figure 2, the plates 40 are arranged between the axis 39 and the extraction assembly 8 and the grooves 41 are arranged at the half-chamber 19.

In use, as we will better see hereinafter, the pod support device 37 is moved from the pod retention position to the disengagement position by a rotation, around the axis 39, of the pod support device 37 towards the extraction assembly 8, so as to determine grooves 41 approach the brewing half-chambers 19.

The movement of the pod support device 37 from the pod retention position to the disengagement position may be made by means of a devoted actuator or, as in the example illustrated in the enclosed figures, by the injection assembly 7, which, advancing towards the extraction assembly 8 while closing the brewing device 1, intercepts the pod support device 37 and provides an axial thrust which determines the rotation of the pod support device 27 around the axis 39.

When the brewing device 1 is re-opened the pod support device 37 moves from the disengagement position to the pod retention position due to its weight, possibly assisted by return elastic means.

According to what illustrated in figures 1, 2 and 3, in a preferred embodiment, the brewing device 1 further comprises an auxiliary pod support device 42, which is arranged below the pod support device 37 and is intended to cooperate with the latter to support the pod 2 from below when this is in the loading position. Even though the auxiliary pod support device 42 is optional given that the pod support device 37 is able by itself to support the pod 2 in the loading position, its function is particularly advantageous in the step of inserting the pod 2, especially in the case of pods with a relatively high mass, as it prevents, thanks to the kinetic energy generated in the free-falling motion, the pod 2 to overcome grooves 41 and slide outside the pod support device 37.

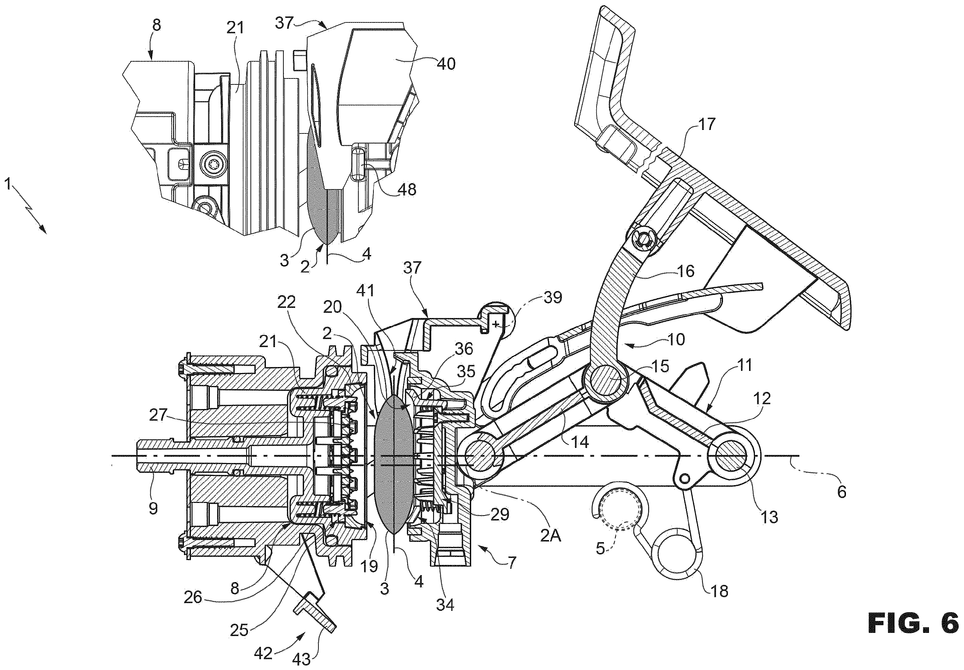

The auxiliary pod support device 42 comprises a bracket 43 which extends below the pod support device 37 transverse to the axis 6 so as to define a support for the flange 4 of a pod 2 engaged between the grooves 41. The bracket 43 is rotatably mounted on the frame 5 to move between an operative position (Figure 2), wherein it is able to support a pod 2 from the bottom, and an inoperative position (figures 6, 7 and 8), wherein it is rotated downwards and leaves free the space underlying the pod support device 37 and the brewing half-chamber 19 so as to fail interfering with the falling of the pod 2 when the brewing device is re-opened at the end of the extraction process.

The bracket 43 can be automatically driven by means of a devoted actuator or it can be manually driven, such as in the example illustrated in the enclosed figures, by a lever transmission mechanism configured to transmit the handle 17 movement to the bracket 43 such that the bracket 43 is in the operative position when the handle 17 is in the lifted position and moves towards the inoperative position as soon as the handle 17 is rotated towards the downward position.

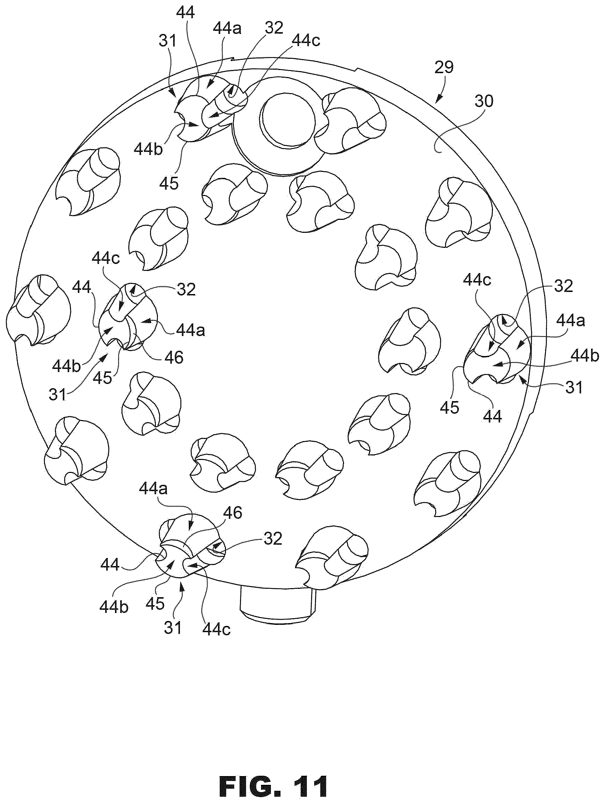

Figures 11, 12 and 13 illustrate in detail the piercing device 29 of the injection assembly 7.

In addition to what previously set forth, it can be appreciated from figures 11 - 13 that the piercing spikes 31 protruding from the disc 30 have the shape of blunt tips, limited at the sides by a side surface 44a and at the top by a top surface 44b, which defines, with the side surface 44a, a cutting edge 44.

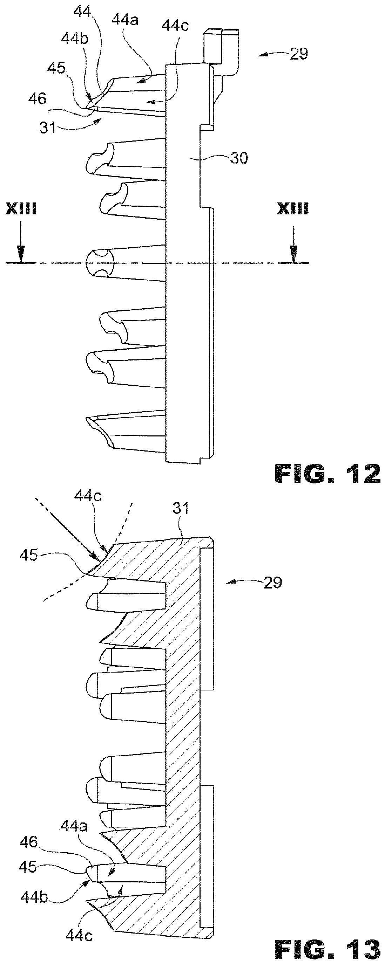

According to what illustrated in Figure 13, the top surface 44b of each piercing spike 31 is concave towards the outer piercing spike 31 itself.

Each piercing spike 31 is generally shaped as a solid obtained supposing to remove from the side surface of a section of a right cone two portions, that are specular with respect to a plane passing through the longitudinal axis of the cone section and delimited by corresponding concave surfaces 44c, which, preferably, extend throughout the height of the piercing spike 31.

Conveniently, the concave surfaces 44c of each piercing spike 31 are the intersection surfaces which would result from interpenetrating the cone section with two cylinders or virtual cones symmetrically arranged at opposite sides of the piercing spike 31.

Each piercing spike 31 is further associated with a pair of the aforesaid holes 32, which are symmetrically arranged at the sides of the piercing spikes 31 and each of them is partially delimited by one of the said concave surfaces 44c.

In other words, each pair of holes 32 associated with a piercing spike 31 can be considered as the holes resulting from interpenetrating the disc 30 into the aforesaid cylinders or virtual cones that interpenetrate into the truncated-cone piercing spike 31. Preferably, the concave surfaces 44c are conical surfaces, with a conicity reversed with respect to that of the truncated-cone surface and, consequently, holes 32 are tapered holes, with transverse section increasing towards the top of the piercing spike 31.

The shape of the top surface 44b, instead, can be considered as the result of the intersection between the piercing spike 31 with a spherical surface whose centre is arranged on the same side of piercing spikes 31 with respect to the disc 30 (Figure 13).

Consequently, the cutting edge 44 has a generally bilobate shape, delimited by two convex portions separated by two symmetrical concave portions.

This configuration allows to obtain a significantly acute cutting edge 44, which is particularly advantageous in case the casing material of the pod 2 is relatively strong, for example an aluminium and/or a relatively thick aluminium and plastic sheet.

The top surface 44b is arranged asymmetrically with respect to the piercing spike 31, i.e. the spherical concavity defined by the top surface 44b is not centered with respect to the longitudinal axis of the piercing spike 31. It follows that the top surface 44b is oblique with respect to the piercing spike 31 axis and one of the convex portions of the cutting edge 44 defines a cutting tip 45.

The concave and asymmetric shape of the top surface 44b allows to obtain an aggressive cutting dynamics and a concentration of the compression strains of the coffee powder on the central axis of the piercing spike 31, partially offsetting the side deviations due to the shape of the pod 2.

Preferably, in order to improve the strength of the cutting edge 44 and move the cutting tip 45 towards the axis of the piercing spike 32, the top surface 44b is connected to the side surface 44a, at the cutting tip 45, by a convex radial joint 46.

The piercing spikes 31 have heights that differ from each other, increasing from the centre to the periphery of the disc 30, such to provide the piercing device 29 with a concave profile that is almost complimentary to the convex profile of the pod 2 so that holes made by the piercing spikes 31 in the pod 2 have a depth as much similar between them as possible. Furthermore, for a better penetration uniformity, the piercing spikes 31 are distributed on the disc 30 along two concentric circles and are oriented such that all the cutting tips 45 are directed towards the centre of the disc 30 (Figure 11).

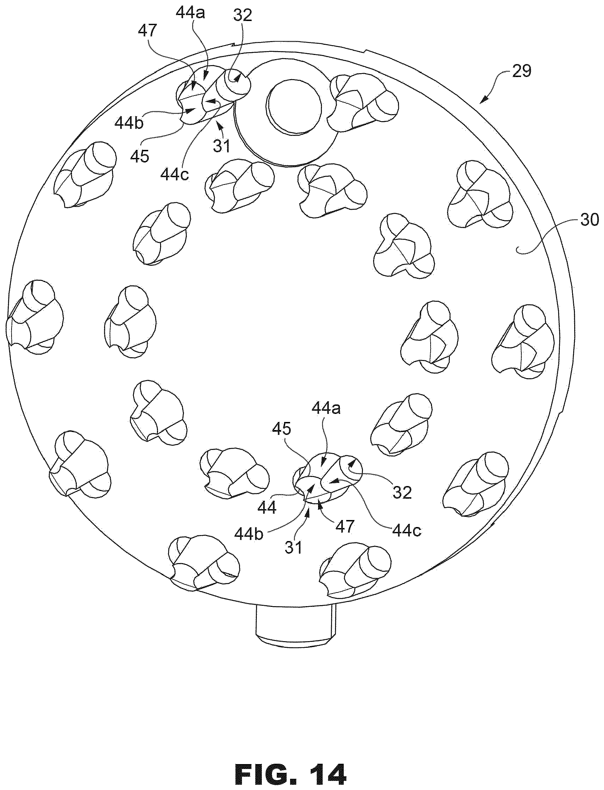

Figures 14, 15 and 16 illustrate in detail an alternative embodiment of the piercing device 29 of the injection assembly 7 which differs from the piercing device 29 described with reference to figures 11 - 13, as for the shape of the piercing spikes 31.

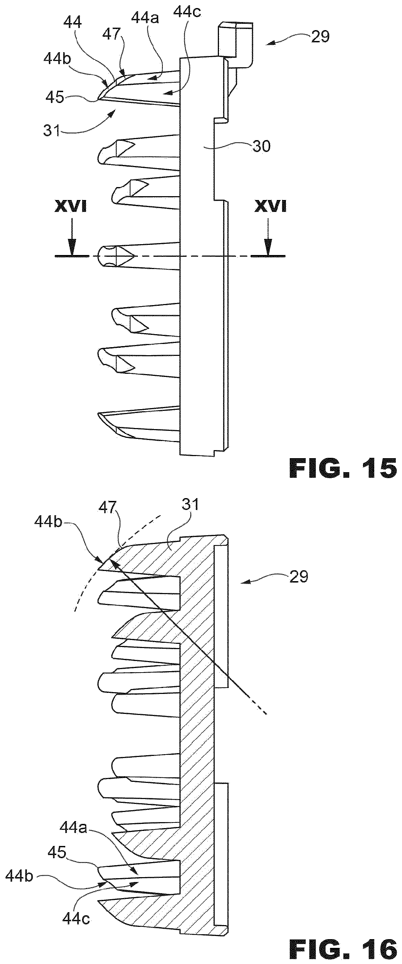

In this case also, the piercing spikes 31 have the shape of cones that are limited at the top by a curved top surface 44b. However, in this case, the top surface 44b of each piercing spike 31 is not concave but outwardly convex and can be considered as the result of the intersection between the piercing spike 31 with a spherical surface whose centre is arranged on the side opposite to the piercing spikes 31 with respect to the disc 30 (Figure 16).

As in the previously described case, in this case also the top surface 44b is arranged asymmetrically with respect to the piercing spike 31, i.e. the spherical concavity defined by the top surface 44b is not centered with respect to the longitudinal axis of the piercing spike 31.

Preferably, at the convex portion of the cutting edge 44 opposite to the cutting tip 45, the top surface 44b is jointed to the side surface 44a by a convex radial joint 47 having a curve that is different with respect to the curve of the top surface 44b. In this case, therefore, the top surface 44b has a generally toroidal profile which joins tangent to the side surface 44a of the piercing spike 31. The double curve has the function to convey to the centre of the piercing spike 31 the result of compression forces thereby encouraging the post-compression of the coffee powder.

The evolving shape of the piercing spike 31, generated by the revolution of the inner profile, allows to obtain a piercing and opening dynamics with a non-linear progression.

This geometry allows downgrading deformation coefficients of the film while increasing depth of penetration of the piercing spikes 31 in the pod 2. This conformation is particularly advantageous in case the casing of the pod 2 is made of relatively low resistant material as it prevents the casing from tearing at the hole formed, but a flap always stays attached.

As in the previous case, in this one also, each piercing spike 31 is complemented with a pair of tapered holes 32 and the piercing spikes 31 have a height different between each other, that increases from the centre to the periphery of the disc 30, so as provide the piercing device 29 with a concave profile almost complimentary to the convex profile of the pod 2 so as to make holes in the pod 2 having a substantially uniform depth.

Eventually, in this case also, in order to obtain a better penetration uniformity, the piercing spikes 31 are distributed on the disc 30 along two concentric circles and are oriented such that all the cutting tips 45 are directed towards the centre of the disc 30 (Figure 14).

To complete what set forth above, it is worth noting that, according to a non-illustrated variant, the position of injection 7 and extraction 8 assemblies may be reversed such that the injection assembly 7 is fixed and the extraction assembly 8 is movable from and to the injection assembly 7. In this case, the pod support device 37 would release the pod 2 into the half-chamber 20 of the injection assembly 7.

The functioning of the brewing device 1 will be hereinafter described referring in particular to figures 2, 6, 7 and 8 which describe the relevant steps of a beverage producing step starting from loading a pod to dispensing a beverage.

### FIGURE 2 - CONFIGURATION OF LOADING THE POD

In this configuration the handle 17 is in the lifted position and leaves the insertion opening 38 free to allow introducing a new pod 2 into the pod support device 37, which is arranged in the pod support position.

The flange 4 of the pod 2 slidably engages the grooves 41 until the pod 2 stops in the loading position, where it faces the brewing half-chamber 19 of the extraction assembly 8 and is supported laterally by the pod support device 37 and at the bottom from the bracket 43.

Preferably, the pod support device 37 is configured to retain the pod 2 in a position that is non-centered with respect to the brewing half-chamber 8, i.e. in a position wherein the axis 2A of the pod 2 is arranged below the axis 6 of the brewing device 1. Preferably, the grooves 41 are configured to support the pod 2 such that the axis 2A of the latter is substantially horizontal and parallel to axis 6.

The position of the pod 2 that is non-centered and lowered with respect to the brewing half-chamber 19 has the function to offset the following lifting of the pod 2 generated by the pod support device 37 upward rotation in the following steps of closing the brewing device 1.

Conveniently, the deviation between the axis 2A of the pod 2 and the axis 6 is of about 2.5 mm.

According to a different non-illustrated embodiment, the pod 2 is retained in a position that is coaxial to the axis 6 and a contrast element is provided to avoid the following lifting thereof during the rotation in the pod support device 37.

Finally, in the loading configuration, either the segmented centering/extracting device 25, and the annular centering/extracting device 34 are in the corresponding extracted positions.

### FIGURE 6: CONFIGURATION OF FIRST CONTACT BETWEEN POD SUPPORT DEVICE AND INJECTION ASSEMBLY

When the handle 17 is moved towards its lowered position, the injection assembly 7 leaves its retracted position and translates along the axis 6 towards its advanced position.

At a certain point of this advancement, the injection assembly 7 contacts the pod support device 37 by means of two side attachments of the injection assembly 7 (Figure 6, detail) which engage corresponding portions of the plates 40 of the pod support device 37. The injection assembly 7 approaches the support device 37 consequently resulting in the half-chamber 20 approaching the pod 2.

In this configuration of first contact between the pod support device 37 and the injection assembly 7, the pod support device 37 is still in the initial pod retention position, the auxiliary pod support device 42 has moved towards the inoperative position, and either the segmented centering/extracting device 25 and the annular centering/extracting device 34 are still in the corresponding extracted positions.

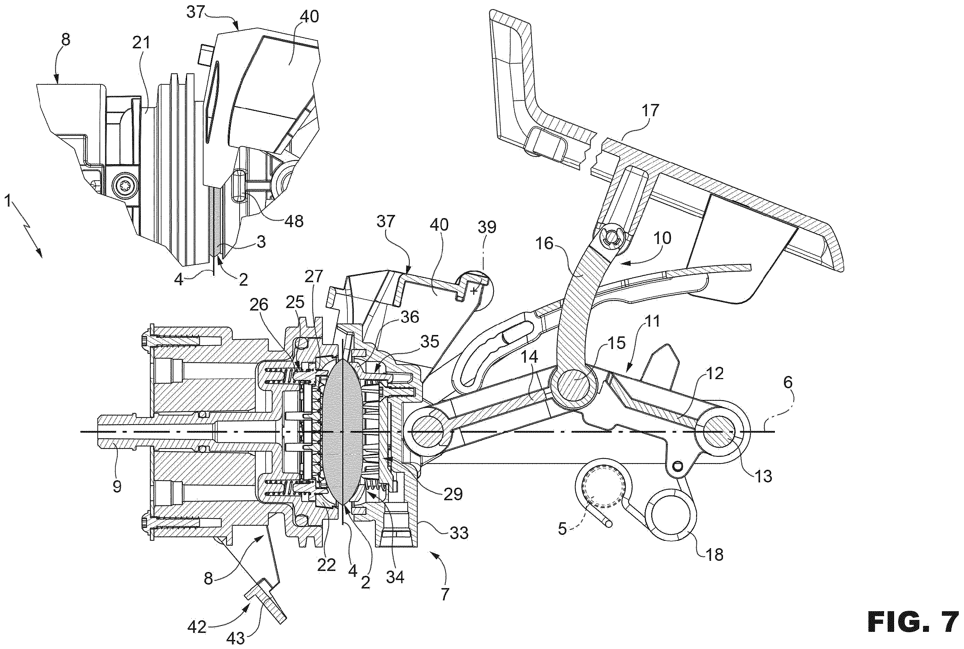

### FIGURE 7: CONFIGURATION OF DETACHING THE POD FROM THE POD SUPPORT DEVICE

As a response to a further advancement of the injection assembly 7 and to the consequent thrust provided to the plates 40 by the two side attachments 48, the pod support device 37 rotates upwards around the axis 39 determining the lifting upwards of the pod 2 and, concurrently, the insertion of the pod 2 in the half-chamber 19, with flexion of the flange 4 and its progressive disengagement from the grooves 41.

After the pod support device 37 has performed a determined rotation angle, preferably of about 11°, the pod support device 37 stops supporting the pod 2 which is inserted in the half-chamber 19 with its own axis 2A substantially coincident with axis 6.

In this configuration, the pod 2 is substantially in the brewing position, i.e. in the position it will take when the injection assembly 7 terminates its stroke and couples with the brewing assembly 8 pressing the flange 4 between them such to obtain a fluid-tight coupling.

According to what illustrated in Figure 7, in this configuration, the central body 3 of the pod 2 is supported on the piercing spikes 24 of the piercing device 23, which is still in the extracted position, and on the protruding elements 27 of the segmented centering/extracting device 25, also in the extracted position.

The pod 2, once left by the pod support device 37, is kept still in the brewing half-chamber 19 by the passive contrasting action exerted by the injection assembly 7, in particular by the annular centering/extracting device 34 37, arranged in its extracted position.

In other words, the insertion of the pod 2 inside the brewing half-chamber 19 is carried out by the pod support device 37, while the injection assembly 7, in particular the annular centering/extracting device 34, does not actively contribute to the insertion of the pod 2 into the brewing half-chamber 19, i.e. it does not substantially provide any axial thrust to the pod 2 while this is still retained by the pod support device 37, but it only exerts a passive contrasting action when the pod 2 is left by the pod support device 37 in the brewing half-chamber 19.

It follows that the movement of the pod 2 from the loading position to the brewing position occurs without submitting the pod 2 to axial stresses, in particular by the injection assembly 7. As a consequence the risk that the pod 2 undergoes significant deformations in the step of closing the brewing chamber, which may jeopardize the beverage extraction process and the discharge of the exhausted pod is removed, or at least minimized.

### FIGURE 8: CONFIGURATION OF BREWING AND DISPENSING

A further movement of the handle 17 towards the lowered position determines a further rotation of the pod support device 37, preferably of another 4-5°, and the advancement of the injection assembly 7 with consequent insertion of the pod 2 into the brewing half-chamber 20, retraction of the annular element 35 of the centering/extracting device 34 and penetration of the piercing spikes 31 in the central body 3 of the pod 2.

When the handle 17 reaches the lowered position, the end surface of the injection assembly 7 and the end surface of the extraction assembly 8 clamp the flange 4 of the pod 2 therebetween and tightly close the brewing chamber formed by the brewing half-chambers 19 and 20 and containing the pod 2.

It is worth noting that the brewing chamber closure determined by this last movement of the injection assembly 7 does not substantially modify the previous pod 2 position, in particular of the central body 3 of the pod 2, which remains supported on piercing spikes 24 and on protruding elements 27, while it is being pierced, on the opposite side, by piercing spikes 31.

The flange 4, axially thrust by the injection device, undergoes a slight flexion towards the extraction assembly 8 and is thus pressed between the two assemblies.

Now, hot pressured water is supplied to the brewing chamber through the inlet duct 33.

The pod 2 imbibition causes the swelling of the pod 2, which thrusts the protruding elements 27 towards their retracted position and is penetrated by the piercing spikes 24, letting the extracted beverage outflow from the pod 2 and thus flow outside the extraction assembly 8 via the outlet duct 9.

When dispensing is over and the handle 17 is returned in the lifted position, the injection assembly 7 departs from the extraction assembly 8 and the pod 2 falls downwards by gravity. The pod 2 effectively detaches from the piercing devices 23 and 29 thanks to the segmented centering/extracting device 25 and annular centering/extracting device 34.

Either the annular element 35 of the annular centering/extracting device 34, and the protruding elements 27 of the segmented centering/extracting device 25 have the advantage to provide the pod 2 with an axial thrust along an annular portion of the pod 2.

In particular, as regards the conformation of the segmented centering/extracting device 25, the fact that the thrust to the pod 2 is imparted by crown-like arranged discreet members such as the protruding elements 27 leads to the following advantages:
- unlike what a single extractor could do, protruding elements 27 allow to evenly distribute the thrust force and therefore do not risk to damage or even tear the pod 2 while extracting coffee, when the pod 2 is damp, especially in case of pods made of poorly resistant materials, such as biodegradable materials;
- the provision of the crown-like arranged protruding elements 27 sliding through corresponding slots of the bottom of the brewing half-chamber 19 makes it possible to manufacture the rest of the brewing half-chamber 19 in a single piece, the concave insert 22, to the entire benefit of uniformity of the surface supporting the pod 2;
- the presence of slots and the elastic assembling of the protruding elements 27 makes it possible to create in the brewing half-chamber 19 expansion areas for the pod 2 when it absorbs hot pressured water. It is thereby possible to conform the concave surface of the brewing half-chamber 19 in such a way as to reproduce the pod 2 convexity with relative precision and give protruding elements 27 the function to define, in respective eyelets, expansion areas for the pod 2 which undergoes a natural, though minimum, swelling when injected with water;
- the position of the protruding elements 27, which are arranged so as to engage a peripheral edge of the central body 3 of the pod 2, avoids "obscuring" the central area of the pod 2 from which the beverage mostly outflows and therefore avoids a reduction of the outlet flow section, as it would happen, for example, in case a single central extractor was provided.

## Claims

1. A brewing device (1) for producing a beverage from a single-serve cartridge (2) in the form of a capsule or a pod;
the brewing device (1) comprises at least one perforating device (29) to perforate the cartridge (2) and including a plate (30) and a plurality of perforators (31) protruding from the plate (30); the plate (30) is provided with holes (32) for the flow of a liquid, and each perforator (31) has the shape of a blunt tip delimited by a side surface (44a) and by a top surface (44b) forming, with the side surface (44a), a cutting edge (44); the top surface (44b) is the resultant of the intersection between the relevant perforator (31) with a virtual spherical surface, and the shape of the cutting edge (44) is generically bilobed and formed by two convex portions separated by two symmetrical concave portions.

2. The brewing device (1) of claim 1, wherein each perforator (31) is in the form of a solid body obtained from a right truncated cone from which two portions are lacking; the two lacking portions are specularly arranged relative to a plane passing through an axis of the truncated cone and form, at the intersection with the frusto-conical side surface (44a) of the perforator (31), respective concave surfaces (44c), each of which defines a respective said concave portion of the cutting edge (44).

3. The brewing device (1) of claim 2, wherein the concave surfaces (44c) of each perforator (31) are the intersection surfaces that would result from the interpenetration of the truncated cone with two virtual cylinders or cones arranged symmetrically on opposite sides of the perforator (31).

4. The brewing device (1) of claim 3, wherein the concave surfaces (44c) of each perforator (31) are the surfaces that would result from the interpenetration of the truncated cone with two virtual cones.

5. The brewing device (1) of claim 3 or 4, wherein the concave surfaces (44c) have inverted conicities relative to a conicity of the frusto-conical side surface (44a) of the truncated cone.

6. The brewing device (1) of any one of claims 2 to 5, wherein the virtual cylinders or cones that define the concave surfaces (44c) extend for the entire height of the perforator (31) and through the plate (30) so as to define said holes (32).

7. The brewing device (1) of any one of the preceding claims, wherein the top surface (44b) is arranged asymmetrically relative to the associated perforator (31) so as to be generally inclined relative to a longitudinal axis of the perforator (31) and to define a cutting apex (45) on the cutting edge (44).

8. The brewing device (1) of claim 7, wherein at least some of the perforators (31) have different heights increasing from the centre towards the periphery of the plate (30) so as to give the piercing device (29) a generally concave profile.

9. The brewing device (1) of claim 7 or 8, wherein the perforators (31) are distributed on the plate (30) in concentric circles and so orientated that the cutting apexes (45) are facing the centre of the plate (30).

10. The brewing device (1) of any one of the preceding claims, wherein the top surface (44b) is concave towards the outside of the perforator (31) and is the resultant of the intersection between the perforator (31) with a virtual spherical surface, whose centre is arranged on the same side of the plate (30) as the perforators (31).

11. The brewing device (1) of claim 10, when dependent on claim 7, wherein at the cutting apex (45), the top surface (44b) is connected to the side surface (44a) through a rounded convex connection (46).

12. The brewing device (1) of any one of the preceding claims, wherein the top surface (44b) is convex towards the outside of the perforator (31) and is the resultant of the intersection between the perforator (31) with a virtual spherical surface, whose centre is arranged on the opposite side of the plate (30) with respect to the perforators (31).

13. The brewing device (1) of claim 12, when dependent on claim 7, wherein at the convex portion of the cutting edge (44) opposite to the cutting apex (45), the top surface (44b) is connected to the side surface (44a) through a rounded convex connection (47) having a curvature different than that of the top surface (44b).

14. The brewing device (1) of any one of the preceding claims, further comprising a water injection assembly (7) and a beverage extraction assembly (8) defining respective brewing half-chambers (20, 19) and relatively movable along a longitudinal axis (6) between an open configuration, in which they mutually define a space for loading a cartridge (2), and a closed configuration, in which the two brewing half-chambers (20, 19) mutually define a brewing chamber for the cartridge (2); the water injection assembly (7) comprises said piercing device (29).

## Patentansprüche

1. Brühvorrichtung (1) zur Herstellung eines Getränks aus einer Einzelportionskartusche (2) in Form einer Kapsel oder eines Pads;
wobei die Brühvorrichtung (1) mindestens eine Perforiervorrichtung (29) zum Perforieren der Kartusche (2) aufweist, wobei die Perforierungsvorrichtung (29) eine Platte (30) sowie eine Vielzahl von Perforatoren (31), die von der Platte (30) vorstehen, umfasst;
wobei die Platte (30) mit Löchern (32) für den Durchfluss einer Flüssigkeit versehen ist, und jeder Perforator (31) die Form einer stumpfen Spitze hat, die begrenzt ist durch eine Seitenfläche (44a) und durch eine obere Fläche (44b), die mit der Seitenfläche (44a) eine Schneidkante (44) bildet;
wobei die obere Fläche (44b) die Resultante aus dem Schnittpunkt des betreffenden Perforators (31) mit einer virtuellen Kugeloberfläche ist, und die Form der Schneidkante (44) allgemein zweiseitig ist und durch zwei konvexe Abschnitte gebildet wird, die durch zwei symmetrische konkave Abschnitte getrennt sind.

2. Brühvorrichtung (1) nach Anspruch 1, wobei jeder Perforator (31) die Form eines massiven Körpers hat, der aus einem rechts abgeschnittenen Kegelstumpf erhalten wird, von dem zwei Abschnitte fehlen;
wobei die beiden fehlenden Abschnitte spiegelbildlich zu einer Ebene angeordnet sind, die durch eine Achse des Kegelstumpfs verläuft, und an der Schnittstelle mit der kegelstumpfförmigen Seitenfläche (44a) des Perforators (31) jeweilige konkave Flächen (44c) bilden, von denen jede einen jeweiligen konkaven Abschnitt der Schneidkante (44) definiert.

3. Brühvorrichtung (1) nach Anspruch 2, wobei die konkaven Flächen (44c) jedes Perforators (31) die Schnittflächen sind, die sich aus dem Eindringen des Kegelstumpfes mit zwei virtuellen Zylindern oder Kegeln ergeben würden, die symmetrisch auf gegenüberliegenden Seiten des Perforators (31) angeordnet sind.

4. Brühvorrichtung (1) nach Anspruch 3, wobei die konkaven Flächen (44c) jedes Perforators (31) die Flächen sind, die sich aus der Durchdringung des Kegelstumpfes mit zwei virtuellen Kegeln ergeben würden.

5. Brühvorrichtung (1) nach Anspruch 3 oder 4, wobei die konkaven Flächen (44c) eine invertierte Kegelform relativ zu einer Kegelform der kegelstumpfförmigen Seitenfläche (44a) des Kegelstumpfs aufweisen.

6. Brühvorrichtung (1) nach einem der Ansprüche 2 bis 5, wobei sich die virtuellen Zylinder oder Kegel, die die konkaven Flächen (44c) definieren, über die gesamte Höhe des Perforators (31) und durch die Platte (30) hindurch erstrecken, so dass sie die Löcher (32) definieren.

7. Brühvorrichtung (1) nach einem der vorhergehenden Ansprüche, wobei die obere Fläche (44b) asymmetrisch zum zugehörigen Perforator (31) angeordnet ist, so dass sie im Allgemeinen relativ zu einer Längsachse des Perforators (31) geneigt ist und eine Schneidspitze (45) an der Schneidkante (44) definiert.

8. Brühvorrichtung (1) nach Anspruch 7, wobei zumindest einige der Perforatoren (31) unterschiedliche Höhen aufweisen, die von der Mitte zum Umfang der Platte (30) hin zunehmen, um der Perforiervorrichtung (29) ein allgemein konkaves Profil zu geben.

9. Brühvorrichtung (1) nach Anspruch 7 oder 8, wobei die Perforatoren (31) in konzentrischen Kreisen auf der Platte (30) verteilt und so ausgerichtet sind, dass die Schneidspitzen (45) zur Mitte der Platte (30) weisen.

10. Brühvorrichtung (1) nach einem der vorhergehenden Ansprüche, wobei die obere Fläche (44b) zur Außenseite des Perforators (31) hin konkav ist und sich aus dem Schnittpunkt des Perforators (31) mit einer virtuellen Kugelfläche ergibt, deren Zentrum auf der gleichen Seite der Platte (30) angeordnet ist wie die Perforatoren (31).

11. Brühvorrichtung (1) nach Anspruch 10, in Abhängigkeit von Anspruch 7, wobei an der Schneidspitze (45) die obere Fläche (44b) mit der Seitenfläche (44a) durch eine abgerundete konvexe Verbindung (46) verbunden ist.

12. Brühvorrichtung (1) nach einem der vorhergehenden Ansprüche, wobei die obere Fläche (44b) zur Außenseite des Perforators (31) hin konvex ist und sich aus der Schnittfläche zwischen dem Perforator (31) und einer virtuellen Kugelfläche ergibt, deren Zentrum auf der bezüglich der Perforatoren (31) gegenüberliegenden Seite der Platte (30) angeordnet ist.

13. Brühvorrichtung (1) nach Anspruch 12, in Abhängigkeit von Anspruch 7, wobei an dem konvexen Abschnitt der Schneidkante (44), der dem Schneidscheitel (45) gegenüberliegt, die obere Fläche (44b) mit der Seitenfläche (44a) durch eine abgerundete konvexe Verbindung (47) verbunden ist, die eine andere Krümmung als die der oberen Fläche (44b) aufweist.

14. Brühvorrichtung (1) nach einem der vorhergehenden Ansprüche, die ferner eine Wassereinspritzanordnung (7) und eine Getränkeextraktionsanordnung (8) aufweist, die jeweilige Brühhalbkammern (20, 19) definieren und entlang einer Längsachse (6) zwischen einer offenen Konfiguration, in der sie praktisch einen Raum zum Laden einer Kartusche (2) definieren, und einer geschlossenen Konfiguration, in der die beiden Brühhalbkammern (20, 19) gemeinsam eine Brühkammer für die Kartusche (2) definieren, relativ beweglich sind; wobei die Wassereinspritzanordnung (7) die Perforiervorrichtung (29) aufweist.

## Revendications

1. Dispositif de préparation (1) pour produire une boisson à partir d'une cartouche individuelle (2) sous la forme d'une capsule ou d'une dosette ;
le dispositif de préparation (1) comprend au moins un dispositif de perforation (29) pour perforer la cartouche (2) et comportant une plaque (30) et une pluralité de perforateurs (31) en saillie depuis la plaque (30) ; la plaque (30) est pourvue de trous (32) pour l'écoulement d'un liquide, et chaque perforateur (31) a la forme d'une pointe émoussée délimitée par une surface de côté (44a) et par une surface de dessus (44b) formant, avec la surface de côté (44a), une arête coupante (44) ; la surface de dessus (44b) est la résultante de l'intersection entre le perforateur (31) concerné avec une surface sphérique virtuelle, et la forme de l'arête coupante (44) est bilobée de façon générique et formée de deux portions convexes séparées par deux portions concaves symétriques.

2. Dispositif de préparation (1) selon la revendication 1, dans lequel chaque perforateur (31) est sous la forme d'un corps plein obtenu à partir d'un cône tronqué droit dont deux portions sont manquantes; les deux portions manquantes sont agencées de façon spéculaire par rapport à un plan passant à travers un axe du cône tronqué et forment, à l'intersection avec la surface de côté (44a) tronconique du perforateur (31), des surfaces concaves (44c) respectives, dont chacune définit une dite portion concave respective de l'arête coupante (44).

3. Dispositif de préparation (1) selon la revendication 2, dans lequel les surfaces concaves (44c) de chaque perforateur (31) sont les surfaces d'intersection qui résulteraient de l'interpénétration du cône tronqué avec deux cylindres ou cônes virtuels agencés de façon symétrique sur des côtés opposés du perforateur (31).

4. Dispositif de préparation (1) selon la revendication 3, dans lequel les surfaces concaves (44c) de chaque perforateur (31) sont les surfaces qui résulteraient de l'interpénétration du cône tronqué avec deux cônes virtuels.

5. Dispositif de préparation (1) selon la revendication 3 ou 4, dans lequel les surfaces concaves (44c) ont des conicités inversées par rapport à une conicité de la surface de côté (44a) tronconique du cône tronqué.

6. Dispositif de préparation (1) selon l'une quelconque des revendications 2 à 5, dans lequel les cylindres ou cônes virtuels qui définissent les surfaces concaves (44c) s'étendent sur toute la hauteur du perforateur (31) et à travers la plaque (30) de façon à définir lesdits trous (32).

7. Dispositif de préparation (1) selon l'une quelconque des revendications précédentes, dans lequel la surface de dessus (44b) est agencée de façon asymétrique par rapport au perforateur (31) associé de façon à être généralement inclinée par rapport à un axe longitudinal du perforateur (31) et à définir un sommet coupant (45) sur l'arête coupante (44).

8. Dispositif de préparation (1) selon la revendication 7, dans lequel au moins certains des perforateurs (31) ont des hauteurs différentes qui augmentent du centre vers la périphérie de la plaque (30) de façon à donner au dispositif de perçage (29) un profil généralement concave.

9. Dispositif de préparation (1) selon la revendication 7 ou 8, dans lequel les perforateurs (31) sont distribués sur la plaque (30) en cercles concentriques et orientés de sorte que les sommets coupants (45) soient tournés vers le centre de la plaque (30).

10. Dispositif de préparation (1) selon l'une quelconque des revendications précédentes, dans lequel la surface de dessus (44b) est concave vers l'extérieur du perforateur (31) et est la résultante de l'intersection entre le perforateur (31) avec une surface sphérique virtuelle, dont le centre est agencé sur le même côté de la plaque (30) que les perforateurs (31).

11. Dispositif de préparation (1) selon la revendication 10, lorsqu'elle dépend de la revendication 7, dans lequel au niveau du sommet coupant (45), la surface de dessus (44b) est reliée à la surface de côté (44a) par le biais d'une liaison convexe arrondie (46).

12. Dispositif de préparation (1) selon l'une quelconque des revendications précédentes, dans lequel la surface de dessus (44b) est convexe vers l'extérieur du perforateur (31) et est la résultante de l'intersection entre le perforateur (31) avec une surface sphérique virtuelle, dont le centre est agencé sur le côté opposé de la plaque (30) vis-à-vis des perforateurs (31).

13. Dispositif de préparation (1) selon la revendication 12, lorsqu'elle dépend de la revendication 7, dans lequel au niveau de la portion convexe de l'arête coupante (44) opposée au sommet coupant (45), la surface de dessus (44b) est reliée à la surface de côté (44a) par le biais d'une liaison convexe arrondie (47) ayant une courbure différente de celle de la surface de dessus (44b).

14. Dispositif de préparation (1) selon l'une quelconque des revendications précédentes, comprenant en outre un ensemble d'injection d'eau (7) et un ensemble d'extraction de boisson (8) définissant des demi-chambres de préparation (20, 19) respectives et relativement mobiles selon un axe longitudinal (6) entre une configuration ouverte, dans laquelle elles définissent mutuellement un espace pour charger une cartouche (2), et une configuration fermée, dans laquelle les deux demi-chambres de préparation (20, 19) définissent mutuellement une chambre de préparation pour la cartouche (2) ; l'ensemble d'injection d'eau (7) comprend ledit dispositif de perçage (29).
